# EUROPEAN PATENT SPECIFICATION

(11) **EP 1 474 894 B1**
(45) Date of publication and mention of the grant of the patent: **29.11.2006**
(21) Application number: 02806418.6
(22) Date of filing: 15.01.2002
(51) Int. Cl.: H04L 12/24, H04L 29/02, H04M 3/22, H04Q 3/00

(54) **IDENTIFICATION OF DELIVERY OBJECTS IN A TELECOMMUNICATIONS NETWORK**
IDENTIFIKATION VON LIEFERUNGSOBJEKTEN EIN EINEM TELEKOMMUNIKATIONSNETZWERK
IDENTIFICATION D'OBJETS DE DISTRIBUTION DANS UN RESEAU DE TELECOMMUNICATION

(43) Date of publication of application: 10.11.2004
(73) Proprietor: Nextlimit AB, 125 33 Älvsjö (SE)
(72) Inventor: BRAVO, Oscar, S-113 41 Stockholm (SE); ESPINOSA, Mario, S-142 33 Skogsas (SE); HAGSTRÖM, Bengt, S-125 33 Älvsjö (SE); HELGESSON-HANSER, Kent, S-141 43 Huddinge (SE); NORDKVIST, Harald, S-860 35 Söraker (SE)
(74) Representative: Börlin, Maria
(86) International application number: PCT/SE2002/000053
(87) International publication number: WO 2003/061199

(56) References cited:
- WO-A-98/33334
- WO-A1-00/67427
- WO-A2-01/37517
- SE-L- 0 002 703
- US-A- 5 640 505
- US-B1- 6 295 293
- SMIRNOV M. ET AL.: 'SLA networks in premium IP' CADENUS DELIVERABLE 1.1, [Online] 15 March 2001, pages 1 - 38, XP002959637 Retrieved from the Internet: <URL:http://www.cadenus.org/deliverables/d1 1-final.pdf> [retrieved on 2002-09-12]

## Description

### Technical Field of the Invention

The present invention relates to a system and method for enabling, in a system comprising a plurality of service providers and a plurality of network providers, for a network provider to manage information for supplying network services in a network.

### Background Art

In telecommunication systems today, different actors provide services to their customers. In practice, a plurality of actors can together form a chain for providing the service to the subscriber. A service is delivered to the customer by way of a network provider connecting the equipment of the customer to the network and effectuating the required functions of the service.

A service provider manages the customer relations, develops, markets and sells telecommunication or data communication services, bills the customers and handles customer support. It is not necessary for the service provider to own or operate an own network.

A network provider manages, maintains and develops the network. The network provider activates telecommunication or data communication services, requested by the service provider, to the geographical addresses where the subscribers have their equipment. The network provider collects data from the network, which data is used as a basis for billing the subscribers for the delivered services.

For an actor described above, it is possible to establish business in geographic areas without having to provide his or her own equipment in said geographic areas. An actor which does not have an own network in a region can establish a business as a service provider. An actor who owns a network can take on the role of a network provider and offer said network to other actors, both service providers and retailers, which already have established customer relations. As a consequence of this, an actor attains agreements with other actors. In these agreements, the actor takes on the role that suits the actor best regarding geography, market aspects, legislation and technical competence. The role of the actor can also be a consequence of licensing. These roles implies that each actor has the technical competence to administer his or her relations to other parties in order to develop, market, sell deliver, maintain, follow up, charge and bill telecommunication services.

Systems used today are characterized by manual solutions. In practice, no appropriate interfaces exist between different providers or actors. Therefore, exchange of information is performed by means of facsimile or mail between operators. In some cases, interfaces based on a standard within ITU-T, the so called X-interface, have been used between operators. Other solutions for automating the interface between control systems have been used in the US in the so called Electronic Bonding Program.

A total solution, which automates the communication between the systems of the actors, and also the operation within the systems, has not been employed. Typically, the operation of each provider uses some form of computer support for carrying out certain parts of a telecommunication service delivery. Thus, in systems used today, the delivery process is divided in smaller activities, wherein each activity is performed manually by reading and writing different registers and network elements. Thereafter, the confirmation and reporting that some activity has been carried out is manually ordered.

In present telecommunication networks, different types of networks exist, which networks are designed according to completely different principles regarding traffic routing, traffic control, network addressing, signaling and allocation of network capacity for the user. One result of the differences in networks is that networks of different types are incompatible. A first user that wants to communicate with a second user, from a first network to a second network, must be certain that the second user is connected to a network of the same type as the first user. Another result of the differences is that the control systems for managing the networks also are different. Since the networks have been designed for certain types of traffic, the control systems have been designed to fit each network, respectively. A system for operating ATM switches can for example not be used for operating telephone switches, or vice versa. The actors in the telecommunication field must therefore develop competence in managing networks employing different network technologies and also competence in managing, maintaining and developing the control systems necessary for the network operation.

As mentioned hereinabove, a plurality of actors operates in the field of telecommunication today. The actors should be able to sell, deliver, maintain, follow up and bill the telecommunication services they provide their customers. It is an advantage for these actors to cooperate with each other in order to reach larger customer groups as well as being able to reach different geographical areas. This requires that the control systems in the networks associated with different actors enables cooperation. Traditional actors, which have been active for a long time, have a system heritage in the form of different networks and control systems for these. Formerly, these actors have had no need to separate the control systems supporting the service provider operation from the control systems supporting the network provider operation. The situation has rather been the opposite; rationalization of the control systems in networks has been advantageous for a traditional actor, since this has resulted in large scale benefits. An example of this is sale and delivery of telephone subscriptions. When selling telephone subscriptions, the seller can register information associated with the subscriber in a control system, which system is later used to order the functions necessary to deliver the service to the subscriber. These functions including, on one hand to connect the subscriber line to the appropriate switch equipment, and on the other hand to set data that activates the service at the telephone switch for this subscriber, By means of this procedure, data associated with the subscriber have been stored in the system containing information both about the access network and the service. Such a rationalization, which previously has been effective, today becomes an obstacle when the actors comprise different retailers, service providers and network providers. An actor comes up against difficulties in taking on different roles in different geographical areas and markets, since network data, customer information and service data are located in the individual control system associated with each actor.

US 5 640 505 discloses a support structure for a telecommunication network which is divided into domains each of which provides an individual management function for the network.

Smirnov M., et. Al. "SLA networks in premium IP", Cadenus Deliverable 1.1 (online), 15 March 2001, p. 1-38, XP002959637 discloses a generic architecture of service creation in premium IP networks, defined as a framework of communication between access, service and resource mediators.

One problem that has to be solved is that since the actors working in the field of telecommunication now takes on different roles as retailers, service providers and network providers, their control systems must be able to exchange customer information, service data and network data with the control systems of other actors.

Another problem that has to be solved is that operations such as sales, delivery, maintenance, follow-up and billing of telecommunication services now are performed in an ineffective way.

### Summary of the Invention

An object of the present invention is therefore to solve the above given problems by providing an effective exchange of information between the different actors. The interfaces and the functions between the service provider systems and the network provider systems should be made as automated as possible, with as little human interaction as possible. The actors interacting with each other should be able to communicate regardless of network technologies employed in the systems.

This object is achieved by a control system for enabling, in a system comprising a plurality of service providers and a plurality of network providers, for a network provider to manage information for providing network services in a telecommunication network according to claim 1, a method for enabling, in a system comprising a plurality of service providers and a plurality of network providers, for a network provider to manage information for providing network services in a telecommunication network according to claim 9 and a computer-readable medium storing computer-executable components in accordance with claim 17. Preferred embodiments are defined by the dependent claims.

According to a first aspect of the invention, a control system is provided, wherein the control system is arranged to place an order, from a service provider, at a network provider. The control system registers information related to said order and delivers the product that corresponds to the order from the service provider, regardless of the network technology used by the network provider.

According to a second aspect of the invention, a method is provided, in which an order from a service provider is placed at a network provider. Information related to said order is registered and the product that corresponds to the order from the service provider is delivered, regardless of the network technology used by the network provider.

The invention is based on the idea that a control system receives an order regarding a product, which in the end will be realized as service, from a service provider. The control system places that order at a network provider and registers information related to said order in registers. The registers can be located within, or outside, the telecommunication network. The product that corresponds to the order from the service provider is delivered, regardless of the network technology used by the network provider. This is possible due to the fact that the communication protocol employed by the service provider is translated to the communication protocol of the network technology used in the telecommunication network, based on predetermined registered network technology information.

The registers located within, or outside, the telecommunication network contains information which enables the actors, such as retailers, service providers and network providers to exchange information in an effective way. For example, the service provider sells and registers subscriptions of a certain type of telecommunication service. The network provider will fetch the information from the register and deliver the required telecommunication service, thus providing the service to the customer. The service provider receives and registers customer complaints regarding service failures, and the network provider performs the trouble shooting and corrects the error. The network provider collects and registers data forming the basis for invoices while the service provider produces and sends the invoices to the customers. The service provider processes market information and statistics and performs analysis and forecasts concerning future service demands and registers this type of information, while the network provider uses the information for future network planning. It is practically possible for a service provider, with a customer base, to run his or her business with a laptop and a mobile phone, thereby accessing the control system, including registers containing required information, of the invention.

According to an embodiment of the invention, the control system is able to coordinate a plurality of network technologies simultaneously, based on the predetermined registered network information. When delivering a service, the control system might pass data to a plurality of networks, each network employing different technologies. The control system might receive components, which put together constitutes a service, from different networks. The control system is able to translate the protocol of the service provider to the protocol of each and every one of these different network technologies, by utilizing corresponding registered network information.

According to another embodiment of the invention, the control system registers and manages data associated with every product, from the time of receiving the product order from the service provider to time of delivery of the product to said service provider and later on, when the product is in use by its user. It is possible to monitor events associated with the product, by accessing the registered data. Examples of events are product function errors, customer use of the product and new functions added to the product after an order from the user.

According to further embodiments of the invention, the control system is capable of registering data associated with network resources installed in the network. On basis of this registered data, the control system can access status information about the network resources and book, connect and release network resources. A network resource is equipment comprising ports, channels, boards and interfaces, but also logic entities like net addresses and telephone numbers. By registering network resource data, it is also possible for the network provider to obtain, for example, a fault log pinpointing a certain rack, magazine or board in the telecommunication network. This type of information is considered very valuable for a network provider.

According to yet another embodiment of the invention, the control system is not only able to translate the protocol of the service provider to the protocols of the different network technologies, but is also able to adapt or translate the protocol to different network elements in the network, which network elements can have different versions, different manufacturers, be of different types and have different technical solutions. The adaption or translation is made based on predetermined registered network technology information, which information includes network element information.

According to yet a further embodiment of the invention, the control system is arranged to change or cancel the delivery of an ordered product to a service provider. The service provider might want to add features to an existing product. There is a possibility that the order cannot be executed due to incorrect order information or due to the fact that there are no resources available to execute the order.

According to another embodiment of the invention, the product is described by using at least one component. A component describes a group of attributes that must be set in a network of a certain technology in order to achieve the functions, features and behaviors required of a given product. A component is realized by resources within a network technology and many different components can be defined within a network technology. By employing this module concept of defining the product using components and resources, the product structure becomes smoother and more flexible. If a resource is added to the network or simply changed, it is not necessary to change the complete product. The specific resource in the product is changed, and this makes the product less sensitive to technology development. Needless to say, technology developments appear rather frequent in the field of telecommunication and data communication.

Further features of, and advantages with, the present invention will become apparent when studying the appended claims and the following description.

### Brief Description of the Drawings

Exemplifying embodiments of the invention will be described in greater detail with reference to the accompanying drawings, in which:
Fig. 1 shows the interface between the service providers and the network providers according to an embodiment of the present invention;
Fig. 2 shows a service provider placing an order at a network provider in accordance with an embodiment of the present invention;
Fig. 3 is a simplified block diagram showing a control system according to an embodiment of the present invention;
Fig. 4 is a detailed block diagram showing a layered control system according to an embodiment of the present invention;
Fig. 5 is a block diagram showing an exemplified product layer included in fig. 4;
Fig. 6 is a block diagram showing an exemplified production layer included in fig. 4;
Fig. 7 is a block diagram showing an exemplified technology layer included in fig. 4; and
Fig. 8 is a block diagram showing an exemplified adaption layer included in fig. 4.

### Description of the Preferred Embodiments of the Invention

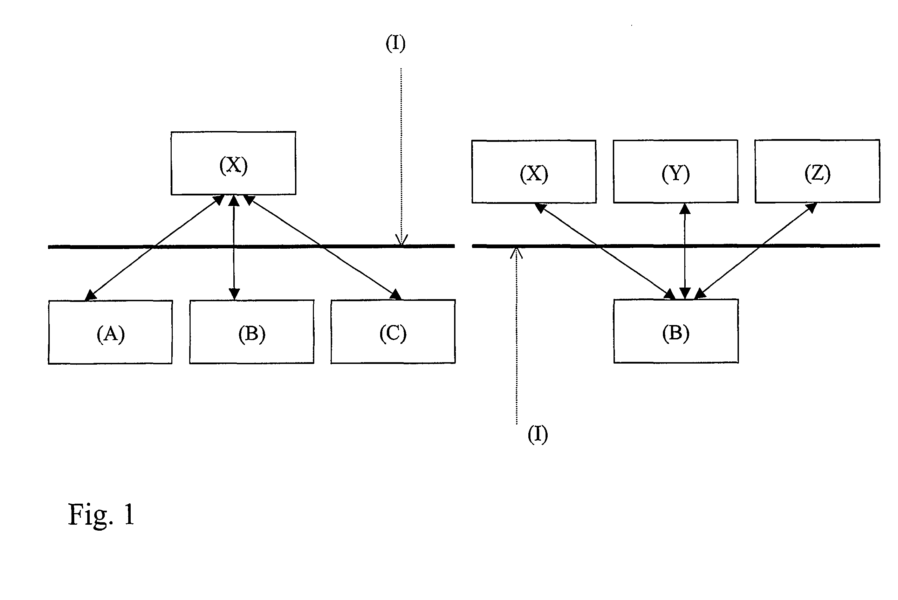

Fig. 1 shows the interface I which enables for a service provider X to exchange information with one, or more, network provider A, B, C and for a single network provider B to exchange information with one, or more, service provider X, Y, Z.

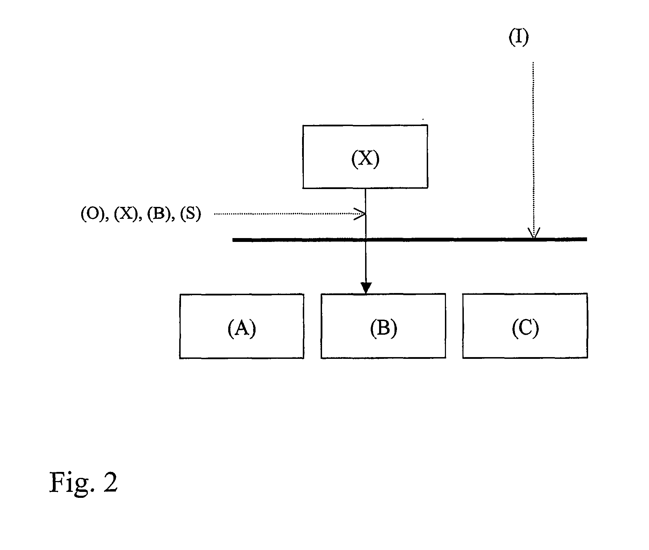

Fig. 2 shows a service provider X placing a product type order, i.e. a telecommunication service order, via the interface I. Every product type order regarding the service S is identified as an individual object O. In the product type order, the involved parties X and B and the service S of interest is included.

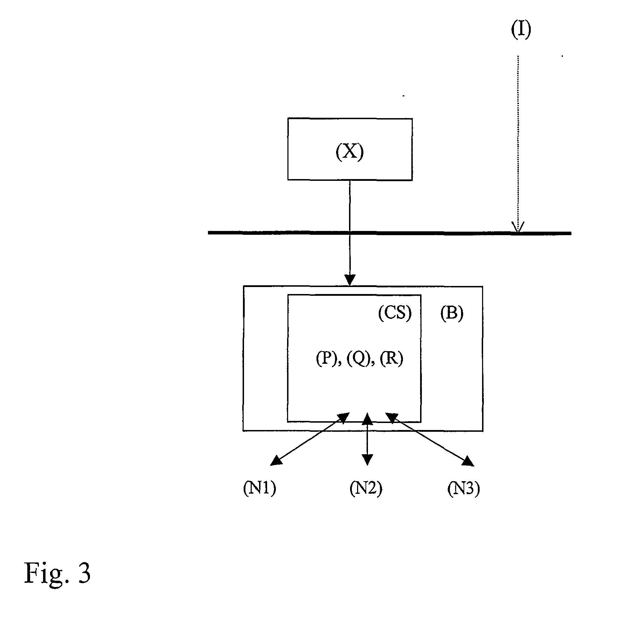

Fig. 3 shows a control system CS operating in the network of the network provider B, which control system CS is supplemented with functions such as:
(1) setting of data of elements built according to different network technologies,
(2) coordinate troubleshooting in different network technologies N1, N2, N3, and
(3) collection of data from networks employing different technologies P, Q, R.

These functions enable automatic processing of information exchanged via the interface I. Delivery of a certain service can comprise setting of data of elements built according to different network technologies, enabling the control system CS to handle different network technologies N1, N2, N3 for providing the delivery of a product. The correction of errors associated with a telecommunication service can result in the fact that elements built according to different network technologies need to be troubleshooted, implying that the control system CS must be able to coordinate troubleshooting in different network technologies N1, N2, N3, within the scope of one single order. Billing data used as a basis for invoices regarding the use of an individual service must be identified individually. In the billing data used as a basis for invoices, involved parts and the actual service delivered should appear. The billing of an individual service involves collection of data from networks employing different technologies. The control system CS should be able to coordinate different network technologies N1, N2, N3 when collecting data for billing.

For the sake of simplicity, the parties involved in the exchange of information will hereinafter be restricted to one service provider and one network provider. As is clearly understood by those skilled in the art, the present invention includes hardware such as computers, processors, memories and storage media etc. The computers or processors or some equivalents thereof, having computing capability, performs the steps comprised in the method according to the invention. Consequently, the means included by the system of the invention is implemented by these computers, processors or equivalents, which is arranged to perform the function of said means when executing appropriate software code. The present invention also includes software such as operating systems, file systems, communication protocols, databases etc. The description is functional, and thus excludes this type of equipment.

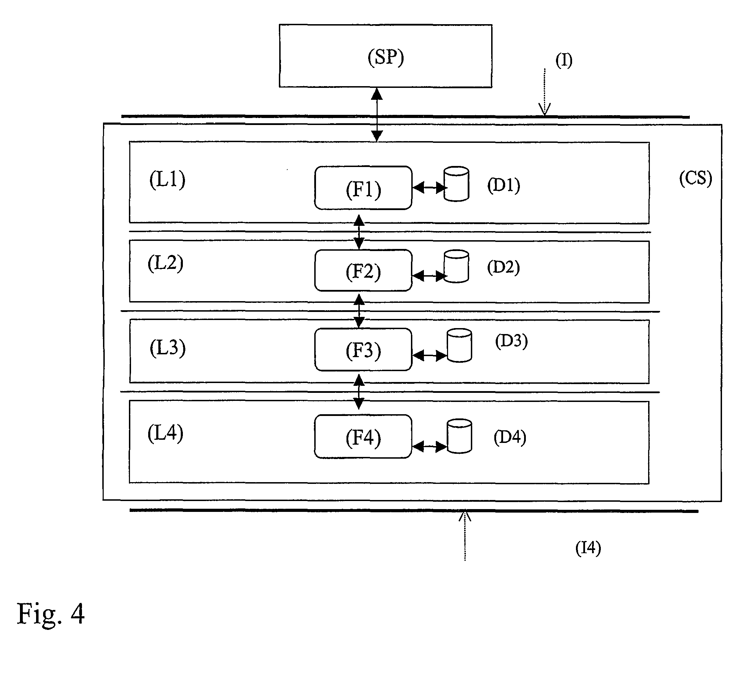

Fig. 4 shows an overview of the present invention. The overview comprises the following layers:
- L1 : Product layer
- L2 : Production layer
- L3 : Technology layer
- L4 : Adaption layer
The layers form a hierarchy. The location of a layer L relative to another layer is such that a function block F included in each layer is only allowed to communicate with registers D within the same layer, or with a function block located in an adjacent layer. The layers will be described in the following.

The product layer L1 is responsible for receiving, identifying and organizing product type orders. An example hereof is orders, complaints or other product related inquiries. Depending on the inquiry, the product concept can represent a type or an instance of a certain type. The product layer is also responsible for deciding which activity function that should be addressed within the production layer.

The production layer L2 comprises one or more activity functions. Examples of activity functions include delivery, follow up and billing. A manager associated with the production layer is responsible for the coordination within an activity function.

The technology layer L3 comprises the technologies that the network provider employs to produce services. The technology layer is responsible for managing these network technologies, including server technologies. The layer therefore comprises a number of managers, each one managing one technology. Such technologies can be, for example, IP, ATM, DTM and ISDN. Since the managing of a certain technology includes a plurality of managing functions, such as configuration, maintenance, quality measurement, billing and security, there can exist more than one manager for every technology. Every manager is thus responsible to handle the technology combination and the activity function it is defined for. The information the technology layer is processing is dependent of the technology in question.

The adaption layer L4 keeps track of the network elements and server systems of different manufacture within an individual technology. The adaption layer is required since network elements and servers can be manufactured by different suppliers or since they support different versions of hardware and software. The responsibility of the adaption layer is to provide a common data model for network elements and server systems of different manufacture and versions. The adaption layer is also responsible that technical managers can communicate with, and control, network elements and server systems, regardless of manufacture and version.

In the following, a detailed description of the layers will be provided. The layers will be exemplified while providing automatic delivery of a service. This should by no means be seen as limiting the control system according to the invention to delivering a service.

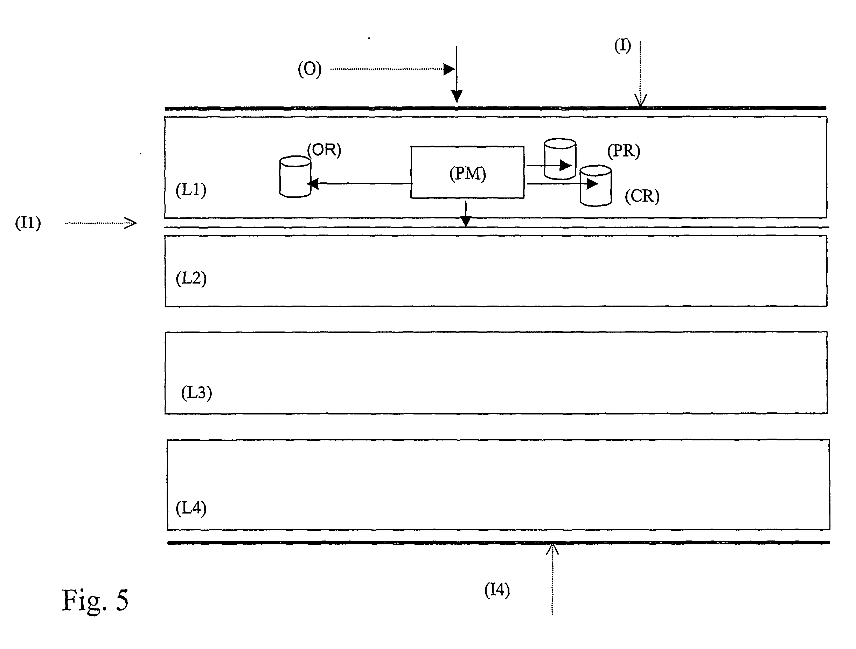

Fig. 5 shows a detailed description of the product layer L1. The product manager PM receives a product type order O via the interface I. The order O can be, for example, "ordering a new instance of a certain product" or "canceling a current product instance". The product manager PM verifies that the order is valid with respect to the product type. This is done by checking the product register PR. The product register PR is arranged to store information about the products available for delivery, information defining the products regarding delivery maintenance, billing, follow-up and the like and information regarding the components that the products consist of. A component represents a group of rules and attributes that must be set on a network technology for the network to supply the properties, functions and behavior defined by the product. Via the interface I, it is possible to associate a verification to the correct call, a call to the correct session and a session to the correct customer system.

The product manager PM verifies that the order is valid for this specific customer by checking the customer register CR. The customer register CR stores information about the customers and which set of products the customers are entitled to order via the interface I. The product manager PM then creates and registers an order containing information such as product type, customer information, delivery date and delivery address, in the order register OR. The order register OR stores information regarding orders in process and delivery time information associated with orders not to be delivered immediately. A confirmation whether the product type order is accepted or not is sent to the service provider. Finally, the underlying production layer L2 is informed that an order needs to be executed. This is done via the production interface I1.

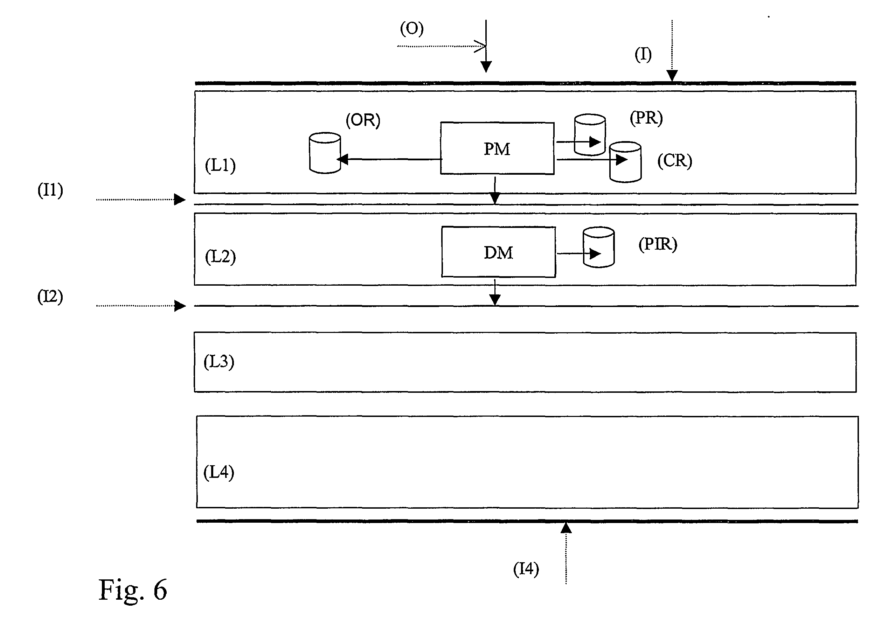

Fig. 6 shows a detailed description of the production layer L2. The delivery manager DM receives a call from the product manager PM via the production interface I1. The call can comprise information such as "current product instance inquiry", "current order status" or "changing current product instance order". The delivery manager DM verifies that the order is valid with respect to the status of the product instance relating to the product. This is done by checking the product instance register PIR. The product instance register PIR is arranged to store information concerning every specific delivery of a product, references to information concerning a specific delivery of a product, but which information, due to practical reasons, is stored in other registers, for example in the technology layer. Moreover, the product instance register PIR updates and keeps track of all information associated to a specific product delivery during the complete lifetime of the product.

The delivery manager DM executes the order of a product instance, and this implies that a new product instance can be created, updated, cancelled etc. depending on the order contents. The execution is performed in cooperation with the product instance register PIR. A confirmation whether the order is executed or not is sent to the product manager PM. There is a possibility that the order cannot be executed due to incorrect order information or due to the fact that there are no resources available to execute the order. Finally, the underlying technology layer L3 is informed that an order needs to be executed. This is done via the technology interface I2.

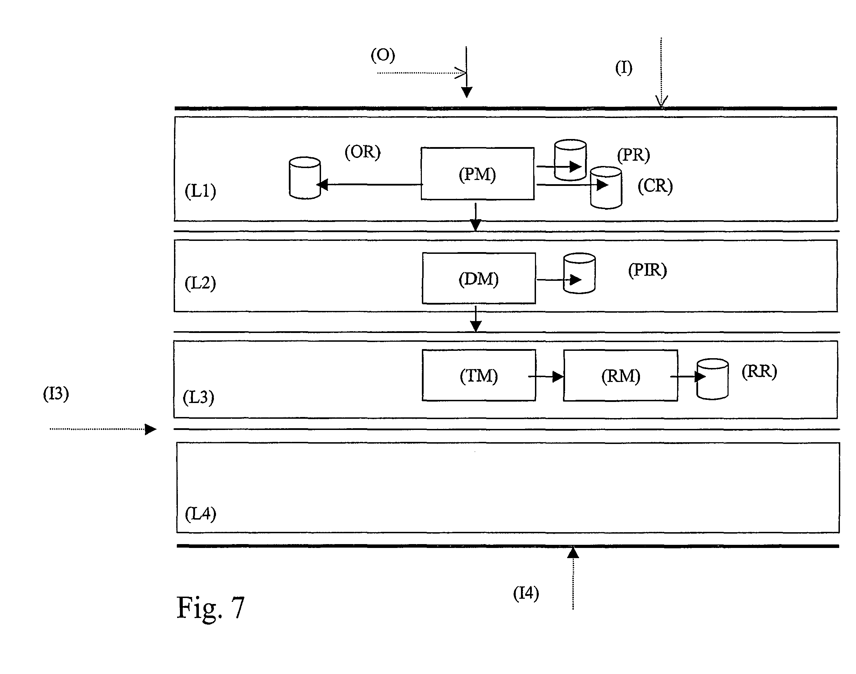

Fig. 7 shows a detailed description of the technology layer L3. Essentially, there is one technology manager TM for every network technology. This means that there will be as many technology managers TM as there are technologies to manage when delivering a product. The technology managers TM coordinates activation of the network resources necessary to deliver a product instance. Accordingly, there is one resource manager RM for every network technology as well. The resource managers RM are arranged to keep track of the status of available resources in a network, register new resources when building and installing new networks, deregister resources when removing resources and to book, connect and release network resources in connection with bookings deliveries and cancellations. The resource manager RM interacts with the resource register RR. The resource register RR stores data related to network resources, which resources comprises equipment, i.e. ports, channels, boards and interfaces, but also logic entities like network addresses and phone numbers. The technology manager TM exchanges information regarding the current network technology and adaption parameters and the required adaption functions needed for communication with operating systems, which is provided for different manufacturers of net elements and server systems, with the adaption layer L3 via the adaption interface I3.

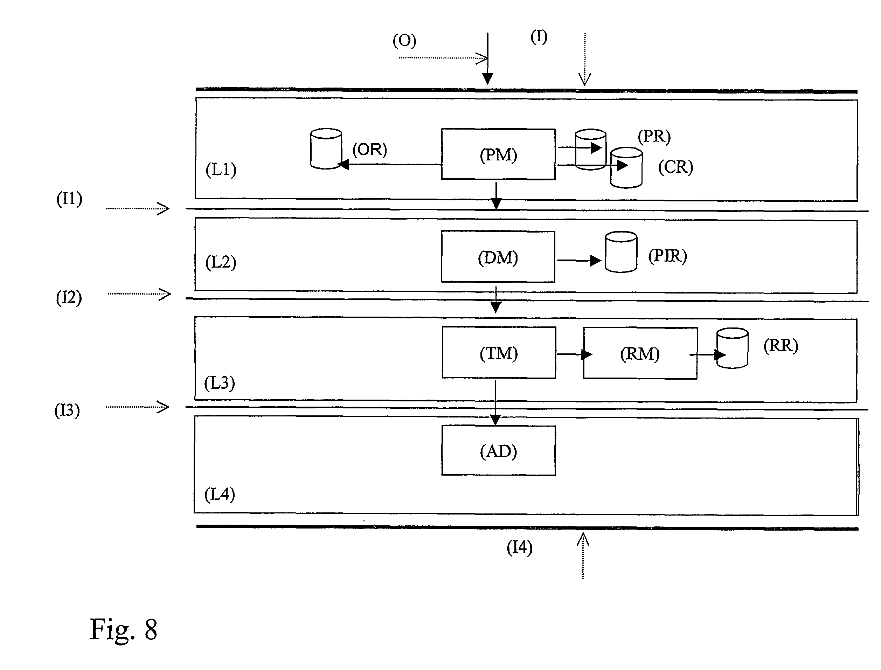

Fig. 8 shows a detailed description of the adaption layer L4. Adaption is a general name for function blocks supporting communication by adapting, or translating, protocols, command languages, data models etc. from one technology to another. The adaption is performed between a certain technology manager TM and a specific operating system. The network interface I4 is the interface towards the actual operating systems. A plurality of different operating systems, network systems and server systems exists, which makes the actual adaption different depending on the specific system that is to be adapted to. The network interface I4 towards the plurality of different operating systems, network systems and server systems consists of:
- Carrier protocols available in a specific system in order to send a message.
- Information models used by a specific system for interpreting an incoming message.
- Communication protocols used to initiate, sustain and end a session towards a specific system.
The adaption layer L4 performs the operation requested by the technology manager TM, for example book, connect or release resources belonging to a specific network element, in a specific rack, magazine, board interface etc. If the operation is performed accurately, the adaption layer will send a verification hereof to the calling technology manager TM. Thus, the final step has been reached, and the operation will move up through the layers again.

An alternative solution is to develop functions for each and every type of delivery, without employing an automated solution. This will require human operators at each interface to initiate input and monitor the process. This would imply an increase in human resources, it would be cost inefficient and it would affect the quality of the deliveries.

Those skilled in the art will realize that the different registers, managers and interfaces must not necessarily be located adjacent to each other, but can be geographically separated.

Even though the invention has been described with reference to specific exemplifying embodiments thereof, many different alterations, modifications and the like will become apparent for those skilled in the art. The described embodiments are therefore not intended to limit the scope of the invention, as defined by the appended claims.

## Claims

1. A control system (NPCS) for a network provider (B), in a system (SY) comprising a plurality of service providers (X, Y, Z) and a plurality of network providers (A, B, C), in which system (SY):
the service providers (X, Y, Z) are adapted to arrange telecommunication products for customers, and the network providers (A, B, C) are adapted to deliver said telecommunication products to the customers, and
the service providers (X, Y, Z) are adapted to use service providers communication protocols (SPCP), and
the network providers (A, B, C) are adapted to use communication protocols (NPCP) of the network technologies, and
the service providers (X, Y, Z) are are adapted to be supported by control systems (SPCS), and the network providers (A, B, C) are are adapted to be supported by control systems (NPCS), wherein the control system (SPCS) of the service providers (X, Y, Z) are separate from the control systems (NPCS) of the network providers (A, B, C), within the system (SY), and
each service provider (X, Y, Z) are adapted to order telecommunication products from any network provider (A, B, C) within the system (SY) and each network provider (A, B, C) are adapted to deliver telecommunication products to a customer of any service provider (X, Y, Z) within the system (SY), and
the service providers (X, Y, Z) are adapted to exchange information with the network providers (A, B, C) via an interface (I), and each product type order (O) set by a service provider (X) includes the identity of the service provider (X), the identity of the network provider (B) and the identity and type of the telecommunication product ordered by the service provider,
which control system (NPCS) is adapted to enable the network provider (B) to manage information for delivering said telecommunication products in its telecommunication network to a customer, said control system (NPCS) comprising:
means (PM-PR) arranged to receive and register a product type order (O), from a service provider (X), at the network provider (B), via the interface (I), said product type order (O) including information on the identity of the service provider (X), the identity of the network provider (B) and the identity and type of the telecommunication product ordered;
means (PM-PR) arranged to identify the network technology of the network provider (B) for the ordered product type, based on predetermined registered network technology information;
means (PM-OR) arranged to create and register an order (O') based on said product type order (O) from the service provider (X);
means (TM) arranged to translate the communication protocols (SPCP) that the service provider is using to the communication protocols (NPCP) of the network technology of the network provider, used for delivery of said telecommunication products ordered by the service provider (X), based on said predetermined registered network technology information; and
means arranged to deliver said telecommunication product, in accordance with the registered order, to the customers of the service provider (X).

2. The control system according to claim 1, wherein the control system is arranged to coordinate a plurality of network technologies simultaneously, based on the predetermined registered network information, by translating the protocol of the service provider to the protocol of each and every one of these different network technologies.

3. The control system according to claim 1 or 2, wherein the control system is arranged to register and manage data associated with every product during the lifetime of the product.

4. The control system according to any of the claims 1-3, wherein the control system is arranged to register data associated with installed network resources.

5. The control system according to claim 5, wherein the control system is arranged to monitor status about, book, connect and release said installed network resources, based on said registered data associated with the installed network resources.

6. The control system according to any of the preceding claims, wherein the control system is arranged to adapt the communication protocols that the service provider is using, to network elements included in the network technology, (which network elements can have different versions, different manufacturers, be of different types and have different technical solutions, based on said predetermined registered network technology information).

7. The control system according to any of the preceding claims, wherein the control system means arranged to deliver said product, in accordance with the registered order, to the service provider, is arranged to change or cancel the delivery of said product.

8. The control system according to any of the preceding claims, wherein the control system is arranged to define a given product by means of forming the product using at least one predetermined registered data set.

9. A method in a system (SY) comprising a plurality of service providers (X, Y, Z) and a plurality of network providers (A, B, C), in which system (SY):
the service providers (X, Y, Z) arrange telecommunication products for customers, and the network providers (A, B, C) deliver said telecommunication products to the customers, and
the service providers (X, Y, Z) use service providers communication protocols (SPCP), and
the network providers (A, B, C) use communication protocols (NPCP) of the network technologies, and
the service providers (X, Y, Z) are supported by control systems (SPCS), and the network providers (A, B, C) are supported by control systems (NPCS), wherein the control system (SPCS) of the service providers (X, Y, Z) are separate from the control systems (NPCS) of the network providers (A, B, C), within the system (SY), and
each service provider (X, Y, Z) can order telecommunication products from any network provider (A, B, C) within the system (SY) and each network provider (A, B, C) can deliver telecommunication products to a customer of any service provider (X, Y, Z) within the system (SY), and
the service providers (X, Y, Z) exchange information with the network providers (A, B, C) via an interface (I), and each product type order (O) set by a service provider (X) includes the identity of the service provider (X), the identity of the network provider (B) and the identity and type of the telecommunication product ordered by the service provider,
which method enables the network provider (B) to manage information for delivering said telecommunication products in its telecommunication network to a customer, wherein the method comprising the steps of:
receiving and registering a product type order (O), from a service provider (X), at the network provider (B), via the interface (I), said product type order (O) including information on the identity of the service provider (X), the identity of the network provider (B) and the identity and type of the telecommunication product ordered;
identifying the network technology of the network provider (B) for the ordered product type, based on predetermined registered network technology information;
creating and registering an order (O') based on said product type order (O) from the service provider (X);
translating the communication protocols (SPCP) that the service provider is using, to the communication protocols (NPCP) of the network technology of the network provider, used for delivery of said telecommunication products ordered by the service provider (X), based on said predetermined registered network technology information; and
delivering said telecommunication product, in accordance with the registered order, to the customers of the service provider (X).

10. The method according to claim 9, comprising the step of: coordinating a plurality of network technologies simultaneously, based on the predetermined registered network information, by translating the protocol of the service provider to the protocol of each and every one of these different network technologies.

11. The method according to claim 9 or 10, comprising the step of: 30 registering and managing data associated with every product during the lifetime of the product.

12. The method according to any of the claims 9-11, comprising the step of:
registering data associated with installed network resources.

13. The method according to claim 12 comprising the step of: monitoring status about, book, connect and release said installed network resources, based on said registered data associated with the installed network resources.

14. The method according to any of the claims 9-13, comprising the step of:
adapting the communication protocols that the service provider is using, to network elements included in the network technology, (which network elements can have different versions, different manufacturers, be of different types and have different technical solutions,) based on said predetermined registered network technology information.

15. The method according to any of the claims 9-14, wherein the delivery of a product, in accordance with the registered order, to the service provider, can be changed or cancelled.

16. The method according to any of the preceding claims, wherein a given product is defined by means of forming the product using at least one predetermined registered data set.

17. A computer-readable medium storing computer-executable components for causing a unit to perform the steps recited in any one of claims 9-16, when the computer-executable components are run on microprocessor included by the unit.

## Patentansprüche

1. Steuersystem (NPCS) für einen Netzwerkanbieter (B) in einem System (SY), das eine Vielzahl von Serviceanbietern (X, Y, Z) und eine Vielzahl von Netzwerkanbietern (A, B, C) umfasst, und in dem (SY):
die Serviceanbieter (X, Y, Z) in der Lage sind, Telekommunikationsprodukte für Kunden zu arrangieren und
die Netzwerkanbieter (A, B, C) in der Lage sind, Telekommunikationsprodukte zu den Kunden zu liefern, und
die Serviceanbieter (X, Y, Z) in der Lage sind, Serviceanbieter-Kommunikationsprotokolle (SPCP) zu nutzen, und
die Netzwerkanbieter (A, B, C) in der Lage sind, Netzwerkprotokolle (NPCP) von Netzwerktechniken zu nutzen, und
die Serviceanbieter (X, Y, Z) in der Lage sind, durch Steuersysteme (SPCS) gestützt zu werden und die Netzwerkanbieter (A, B, C) in der Lage sind, durch Steuersysteme gestützt zu werden, wobei das Steuersystem (SPCS) der Serviceanbieter (X, Y, Z) von den Steuersystemen (NPCS) der Netzwerkanbieter (A, B, C) im System (SY) getrennt ist, und
jeder Serviceanbieter (X, Y, Z) in der Lage ist, Telekommunikationsprodukte von jedem Netzwerkanbieter (A, B, C) im System (SY) zu bestellen und jeder Netzwerkanbieter (A, B, C) in der Lage ist, Telekommunikationsprodukte zu einem Kunden jedes Serviceanbieters (X, Y, Z) im System (SY) zu liefern, und
die Serviceanbieter (X, Y, Z) in der Lage sind, Information mit den Netzwerkanbietern (A, B, C) über eine Schnittstelle (I) auszutauschen, und jede durch einen Serviceanbieter (X) gesetzte Produktbestellung (O) die Identität des Serviceanbieters (X), die Identität des Netzwerkanbieters (B) sowie die Identität und den Typ des durch den Serviceanbieter bestellten Telekommunikationsproduktes enthält,
wobei das Steuersystem (NPCS) in der Lage ist, den Netzwerkanbieter (B) in die Lage zu versetzen, Information zur Lieferung der Telekommunikationsprodukte in seinem Telekommunikationsnetzwerk an einen Kunden zu handhaben,
und wobei das Steuersystem folgende Merkmale umfasst:
Mittel (PM-PR) zum Empfang und zur Registrierung einer Produkttypbestellung (O) von einem Serviceanbieter (X) beim Netzwerkanbieter (B) über die Schnittstelle (I), wobei die Produkttypbestellung (O) Information über die Identität des Serviceanbieters (X), die Identität des Netzwerkanbieters (B) sowie die Identität und den Typ des bestellten Telekommunikationsproduktes enthält;
Mittel (PM-PR) zur Identifizierung der Netzwerktechnik des Netzwerkanbieters (B) für den bestellten Produkttyp auf der Basis einer vorgegebenen registrierten Netzwerktechnikinformation;
Mittel (PM-OR) zur Erzeugung und Registrierung einer Bestellung (O') auf der Basis der Produkttypbestellung (O) vom Serviceanbieter (X);
Mittel (TM) zur Übertragung der Kommunikationsprotokolle (SPCP), welche der Serviceanbieter zu Kommunikationsprotokollen (NPCP) der Netzwerktechnik des Netzwerkanbieters nutzt, die zur Lieferung der durch den Serviceanbieter (X) bestellten Telekommunikationsprodukte verwendet wird, auf der Basis der vorgegebenen registrierten Netzwerktechnikinformation und
Mittel zur Lieferung des Telekommunikationsproduktes gemäß der registrierten Bestellung zu den Kunden des Serviceanbieters (X).

2. Steuersystem nach Anspruch 1, in dem das Steuersystem zur gleichzeitigen Koordinierung einer Vielzahl von Netzwerktechniken auf der Basis der vorgegebenen registrierten Netzwerkinformation durch Übertragung des Protokolls des Serviceanbieters zum Protokoll jeder und aller unterschiedlicher Netzwerktechniken ausgebildet ist.

3. Steuersystem nach Anspruch 1 oder 2, in dem das Steuersystem zur Registrierung und Handhabung von Daten ausgebildet ist, die jedem Produkt während der Lebensdauer des Produktes zugeordnet sind.

4. Steuersystem nach den Ansprüchen 1 bis 3, in dem das Steuersystem zur Registrierung von installierten Netzwerkquellen zugehörigen Daten ausgebildet ist.

5. Steuersystem nach Anspruch 5, in dem das Steuersystem zur Überwachung des Status über die Buchung, Verbindung und Freigabe der installierten Netzwerkquellen auf der Basis der den installierten Netzwerkquellen zugeordneten Daten ausgebildet ist.

6. Steuersystem nach den vorhergehenden Ansprüchen, in dem das Steuersystem zur Anpassung der Kommunikationsprotokolle, welche der Serviceanbieter nutzt, an die Netzwerkelemente ausgebildet ist, welche in der Netzwerktechnologie enthalten sind (die Netzwerkelemente können von unterschiedlichen Herstellern stammen, unterschiedliche Versionen, unterschiedliche Typen und unterschiedliche technische Lösungen auf der Basis der vorgegebenen registrierten Netzwerktechnikinformation sein).

7. Steuersystem nach den vorhergehenden Ansprüchen, in dem das Steuersystem zur Lieferung des Produktes gemäß der registrierten Bestellung an den Serviceanbieter und zur Änderung oder Streichung der Lieferung des Produktes ausgebildet ist.

8. Steuersystem nach den vorhergehenden Ansprüchen, in dem das Steuersystem zur Definition eines gegebenen Produktes mittels Bildung des Produktes unter Verwendung wenigstens eines vorgegebenen registrierten Datensatzes ausgebildet ist.

9. Verfahren in einem System (SY), umfassend eine Vielzahl von Serviceanbietern (X, Y, Z) und eine Vielzahl von Netzwerkanbietern (A, B, C), in dem:
die Serviceanbieter (X, Y, Z) Telekommunikationsprodukte für Kunden arrangieren und die Netzwerkanbieter (A, B, C) die Telekommunikationsprodukte zu den Kunden liefern, und
die Serviceanbieter (X, Y, Z)
Serviceanbieter-Kommunikationsprotokolle (SPCP) nutzen, und
die Netzwerkanbieter (A, B, C) Kommunikationsprotokolle (NPCP) von Netzwerktechniken nutzen; und
die Serviceanbieter (X, Y, Z) durch Steuersysteme (SPCS) gestützt sind und die Netzwerkanbieter (A, B, C) durch Steuersysteme (NPCS) gestützt sind, wobei das Steuersystem (SPCS) der Netzwerkanbieter (X, Y, Z) von den Steuersystemen (NPCS) der Netzwerkanbieter (A, B, C) im System (SY) getrennt sind, und
jeder Serviceanbieter (X, Y, Z) Telekommunikationsprodukte von jedem Netzwerkanbieter (A, B, C) im System (SY) bestellen kann und jeder Netzwerkanbieter (A, B, C) Telekommunikationsprodukte zu einem Kunden jedes Serviceanbieters (X, Y, Z) im System (SY) liefern kann, und
die Serviceanbieter (X, Y, Z) Information mit den Netzwerkanbietern (A, B, C) über eine Schnittstelle (I) austauschen und jede durch einen Serviceanbieter (X) gesetzte Produkttypbestellung (O) die Identität des Serviceanbieters (X), die Identität des Netzwerkanbieters (B) sowie die Identität und den Typ des durch den Serviceanbieter bestellten Telekommunikationsproduktes enthält,
wobei das Verfahren den Netzwerkanbieter (B) in die Lage versetzt, Information für die Lieferung der Telekommunikationsprodukte in seinem Telekommunikationsnetzwerk zu einem Kunden zu handhaben,
wobei das Verfahren folgende Schritte umfasst:
Empfangen und Registrieren einer Produkttypbestellung (O) von einem Serviceanbieter (X) an einem Netzwerkanbieter (B) über die Schnittstelle (I), wobei die Produkttypbestellung (O) Information über die Identität des Serviceanbieters (X), die Identität des Netzwerkanbieters (B) sowie die Identität und den Typ des bestellten Telekommunikationsproduktes enthält; Identifizieren der Netzwerktechnik des Netzwerkanbieters (B) für den bestellten Produkttyp auf der Basis einer vorgegebenen registrierten Netzwerktechnikinformation;
Erzeugen und Registrieren einer Bestellung (O') auf der Basis der Produkttypbestellung (O) vom Serviceanbieter (X) ;
Übertragen der Kommunikationsprotokolle (SPCP), welche der Serviceanbieter benutzt, zu den Kommunikationsprotokollen (NPCP) der Netzwerktechnik des Netzwerkanbieters, welche für die Lieferung der durch den Serviceanbieter (X) bestellten Telekommunikationsprodukte auf der Basis der vorgegebenen registrierten Netzwerktechnikinformation benutzt wird; und
Liefern des Telekommunikationsproduktes gemäß der registrierten Bestellung zu den Kunden des Serviceanbieters (X).

10. Verfahren nach Anspruch 9, umfassend den folgenden Schritt: gleichzeitige Koordinierung einer Vielzahl von Netzwerktechniken auf der Basis der vorgegebenen registrierten Netzwerkinformation durch Übertragung des Protokolls des Serviceanbieters zum Protokoll jedes und aller verschiedenen Netzwerktechniken.

11. Verfahren nach Anspruch 9 oder 10, umfassend den folgenden Schritt: Registrieren und Arrangieren von jedem Produkt zugeordneten Daten während der Lebensdauer des Produktes.

12. Verfahren nach den Ansprüche 9 bis 11, umfassend den folgenden Schritt: Registrieren von installierten Netzwerkquellen zugeordneten Daten.

13. Verfahren nach Anspruch 12, umfassend den folgenden Schritt: Überwachen des Status, Überbuchen, Verbinden und Freigeben der installierten Netzwerkquellen auf der Basis der den installierten Netzwerkquellen zugeordneten registrierten Daten.

14. Verfahren nach den Ansprüchen 9 bis 13, umfassend den folgenden Schritt.
Anpassen der Kommunikationsprotokolle, welche der Serviceanbieter nutzt, an in der Netzwerktechnik enthaltene Netzwerkelemente (die Netzwerkelemente können von unterschiedlichen Herstellern stammen, verschiedene Versionen, unterschiedliche Typen sein und unterschiedliche technische Lösungen haben) auf der Basis der vorgegebenen registrierten Netzwerktechnikinformation.

15. Verfahren nach den Ansprüchen 9 bis 14, bei dem die Lieferung eines Produktes gemäß der registrierten Bestellung zum Serviceanbieter geändert oder gelöscht werden kann.

16. Verfahren nach den vorherigen Ansprüchen, bei dem ein gegebenes Produkt durch Bilden des Produktes unter Verwendung wenigstens eines vorgegebenen registrierten Datensatzes definiert wird.

17. Durch einen Computer lesbares Medium, das durch einen Computer abarbeitbare Komponenten speichert, um eine Einheit zu veranlassen, die Schritte nach den Ansprüchen 9 bis 16 auszuführen, wenn die durch einen Computer abarbeitbaren Komponenten auf einem in der Einheit enthaltenen Mikroprozessor laufen.

## Revendications

1. Système de commande (NPCS) pour un fournisseur de réseau (B), dans un système (SY) comprenant une pluralité de fournisseurs de service (X,Y,Z) et une pluralité de fournisseurs de réseau (A,B,C), système (SY) dans lequel :
les fournisseurs de service (X,Y,Z) sont adaptés pour agencer des produits de télécommunication pour des clients, et les fournisseurs de réseau (A,B,C) sont adaptés pour délivrer lesdits produits de télécommunication aux clients, et
les fournisseurs de service (X,Y,Z) sont adaptés pour utiliser des protocoles de communication de fournisseurs de service (SPCP, pour service providers communication protocols), et
les fournisseurs de réseau (A,B,C) sont adaptés pour utiliser des protocoles de communication (NCPC) des technologies de réseau, et
les fournisseurs de service (X,Y,Z) sont adaptés pour être supportés par des systèmes de commande (SPCS), et les fournisseurs de réseau (A,B,C) sont adaptés pour être supportés par des systèmes de commande (NPCS), dans lequel les systèmes de commande (NPCS) des fournisseurs de service (X,Y,Z) sont séparés des systèmes de commande (NPCS) des fournisseurs de réseau (A,B,C) dans le système (SY), et
chaque fournisseur de service (X,Y,Z) est adapté pour commander des produits de télécommunication depuis un fournisseur de réseau (A,B,C) quelconque dans le système (SY), et chaque fournisseur de réseau (A,B,C) est adapté pour délivrer des produits de télécommunication à un client d'un fournisseur de service (X,Y,Z) quelconque dans le système (SY), et
les fournisseurs de service (X,Y,Z) sont adaptés pour échanger de l'information avec les fournisseurs de réseau (A,B,C) via une interface (I), et chaque commande de type de produit (0), fixée par un fournisseur de service (X,Y,Z), inclut l'identité du fournisseur de réseau (B) et l'identité et le type du produit de télécommunication commandé par le fournisseur de service, ledit système de commande (NPCS) est adapté pour permettre au fournisseur de réseau (B) de gérer l'information pour délivrer lesdits produits de télécommunication dans son réseau de télécommunication à un client, ledit système de commande (NPCS) comprenant :
des moyens (PM-PR), agencés pour recevoir et enregistrer une commande de type de produit (O), venant d'un fournisseur de service (X), au fournisseur de réseau (B), via l'interface (I), ladite commande de type de produit (0) incluant une information concernant l'identité du fournisseur de service (X), l'identité du fournisseur de réseau (B) et l'identité et le type de produit de télécommunication ayant été commandé ;
des moyens (PM-PR) agencés pour identifier la technologie de réseau du fournisseur de réseau (B) pour le type de produit commandé, d'après une information de technologie de réseau enregistrée, prédéterminée ;
des moyens (PM-OR) agencés pour créer et enregistrer un ordre (O') basé sur ledit ordre de type de produit (0) venant du fournisseur de service (X) ;
des moyens (TM) agencés pour traduire les protocoles de communication (SPCP), que le fournisseur de service utilise, en protocoles de communication (NPCP) de la technologie de réseau du fournisseur de réseau, utilisés pour délivrer lesdits produits de télécommunication commandés par le fournisseur de service (X), d'après ladite information de technologie de réseau enregistrée, prédéterminée ; et
des moyens agencés pour délivrer ledit produit de télécommunication, selon la commande enregistrée, aux clients du fournisseur de service (X).

2. Système de commande selon la revendication 1, dans lequel le système de commande est agencé pour coordonner une pluralité de technologies de réseau, simultanément, d'après l'information de réseau enregistrée prédéterminée, en traduisant le protocole du fournisseur de service au protocole de chacune des technologies de réseau différentes.

3. Système de commande selon la revendication 1 ou 2, dans lequel le système de commande est agencé pour enregistrer et gérer des données, associées à chaque produit durant la durée de vie du produit.

4. Système de commande selon l'une quelconque des revendications 1 à 3, dans lequel le système de commande est agencé pour enregistrer des données, associées à des ressources de réseau installées.

5. Système de commande selon la revendication 4, dans lequel le système de commande est agencé pour surveiller un état concernant la réservation à la connexion et le déclenchement desdites ressources de réseau installées, d'après lesdites données enregistrées, associées aux ressources de réseau installées.

6. Système de commande selon l'une quelconque des revendications précédentes, dans lequel le système de commande est agencé pour adapter les protocoles de communication qu'utilise le fournisseur de service, à des éléments de réseau inclus dans la technologie de réseau, (ces éléments de réseau peuvent être de versions différentes, de fabricants différents, de types différents, et avoir des solutions techniques différentes, d'après ladite information de technologie de réseau enregistrée prédéterminée).

7. Système de commande selon l'une quelconque des revendications précédentes, dans lequel les moyens de système de commande agencés pour délivrer lesdits produits, selon l'ordre enregistré, au fournisseur de service, sont agencés pour changer ou annuler la délivrance dudit produit.

8. Système de commande selon l'une quelconque des revendications précédentes, dans lequel le système de commande est agencé pour définir un produit donné, au moyen de l'information du produit, en utilisant au moins un jeu de données enregistrées prédéterminées.

9. Procédé dans un système (SY), comprenant une pluralité de fournisseurs de service (X,Y,Z) et une pluralité de fournisseurs de réseau (A,B,C), système (SY) dans lequel :
les fournisseurs de service (X,Y,Z) agencent des produits de télécommunication pour des clients, et les fournisseurs de réseau (A,B,C) délivrent lesdits produits de télécommunication aux clients, et
les fournisseurs de service (X,Y,Z) utilisent des protocoles de communication de fournisseur de service (SPCP), et
les fournisseurs de réseau (A,B,C) utilisent des protocoles de communication (NPCP) des technologies de réseau, et
les fournisseurs de service (X,Y,Z) sont supportés par des systèmes de commande (SPCS), et les fournisseurs de réseau (A,B,C) sont supportés par des systèmes de commande (NPCS), dans lequel les systèmes de commande (SPCS) des fournisseurs de service (X,Y,Z) sont séparés des systèmes de commande (NPCS) des fournisseurs de réseau (A,B,C) dans le système (NY), et
chaque fournisseur de service (X,Y,Z) peut commander des produits de télécommunication depuis un fournisseur de réseau (A,B,C) quelconque dans le système (SY), et chaque fournisseur de réseau (A,B,C) peut délivrer des produits de télécommunication à un client d'un fournisseur de service (X,Y,Z) quelconque dans le système (SY), et
les fournisseurs de service (X,Y,Z) échangent de l'information avec les fournisseurs de réseau (A,B,C), via une interface (I), et chaque commande de type de produit (0), fixée par un fournisseur de service (X), inclut l'identité du fournisseur de service (X), l'identité du fournisseur de réseau (B) et l'identité et le type du produit de télécommunication commandée par le fournisseur de service,
ledit procédé permet au fournisseur de réseau (B) de gérer de l'information pour délivrer lesdits produits de télécommunication dans son réseau de télécommunication à un client, dans lequel le procédé comprend les étapes consistant à :
recevoir et enregistrer une commande de type de produit (0) venant d'un fournisseur de service (X) au fournisseur de réseau (B), via l'interface (I), ladite commande de produit (0) incluant de l'information concernant l'identité du fournisseur de service (X), l'identité du fournisseur de réseau (B) et l'identité et le type du produit de télécommunication commandé ;
identifier la technologie de réseau du fournisseur de réseau (B) pour le type de produit commandé, d'après l'information de technologie de réseau enregistrée prédéterminée ;
créer et enregistrer une commande (0'), d'après ladite commande de type de produit (O) venant du fournisseur de service (X) ;
traduire les protocoles de communication (SPCP) qu'utilise le fournisseur de service, en protocoles de communication (NPCP) de la technologie de réseau du fournisseur de réseau, utilisés pour délivrer lesdits produits de télécommunication commandés par le fournisseur de service (X), d'après ladite information de technologie de réseau enregistrée prédéterminée ; et
délivrer ledit produit de télécommunication, selon la commande enregistrée, aux clients du fournisseur de service (X).

10. Procédé selon la revendication 9, comprenant l'étape consistant à : coordonner une pluralité de technologies de réseau simultanément, basées sur l'information de réseau enregistrée prédéterminée, en traduisant le protocole du fournisseur de service en protocole de chacune de ces technologies de réseau différentes.

11. Procédé selon la revendication 9 ou 10, comprenant l'étape consistant à : enregistrer et gérer des données associées à chaque produit durant la durée de vie du produit.

12. Procédé selon l'une quelconque des revendications 9 à 11, comprenant l'étape consistant à : enregistrer des données associées à des ressources de réseau installées.

13. Procédé selon la revendication 12, comprenant l'étape de : surveillance de l'état concernant la réservation, la connexion et le déclenchement desdites ressources de réseau installées, d'après lesdites données enregistrées, associées aux ressources de réseau installées.

14. Procédé selon l'une quelconque des revendications 9 à 13, comprenant l'étape consistant à : adapter les protocoles de communication qu'utilise le fournisseur de service à des éléments de réseau inclus dans la technologie de réseau, (ces éléments de réseau pouvant avoir différentes versions, différents fabricants, être de types différents et avoir des solutions techniques différentes), d'après ladite information de technologie de réseau enregistrée prédéterminée.

15. Procédé selon l'une quelconque des revendications 9 à 14, dans lequel la délivrance d'un produit selon la commande enregistrée, aux fournisseurs de service, peut être modifiée ou annulée.

16. Procédé selon l'une quelconque des revendications précédentes, dans lequel un produit donné est défini par des moyens de formation du produit, en utilisant au moins un jeu de données enregistrées prédéterminé.

17. Support lisible par ordinateur, stockant des composants exécutables par ordinateur, pour qu'une unité accomplisse les étapes indiquées à l'une quelconque des revendications 9 à 16, lorsque les composants exécutables par ordinateur fonctionnent sur un microprocesseur inclus dans l'unité.
